Europäisches Patentamt

European Patent Office

Office européen des brevets

(11) Veröffentlichungsnummer: **0 216 330 B1**

(12) **EUROPÄISCHE PATENTSCHRIFT**

(45) Veröffentlichungstag der Patentschrift: **22.01.92**

(51) Int. Cl.⁵: **G03B  27/54**

(21) Anmeldenummer: **86112966.6**

(22) Anmeldetag: **19.09.86**

(54) **Beleuchtungseinrichtung in einem Projektionskopiergerät.**

(30) Priorität: **27.09.85 DE 3534473**
      **03.04.86 DE 3611086**

(43) Veröffentlichungstag der Anmeldung:
   **01.04.87 Patentblatt  87/14**

(45) Bekanntmachung des Hinweises auf die
   Patenterteilung:
   **22.01.92 Patentblatt  92/04**

(84) Benannte Vertragsstaaten:
   **AT BE CH DE FR GB IT LI LU NL SE**

(56) Entgegenhaltungen:
   **EP-A- 0 016 555**
   **DE-A- 2 139 326**
   **DE-A- 3 225 103**
   **DE-C- 2 452 979**
   **US-A- 3 368 071**

(73) Patentinhaber: **HOECHST AKTIENGESELL-
   SCHAFT**
   **Postfach 80 03 20**
   **W-6230 Frankturt am Main 80(DE)**

(72) Erfinder: **Hilgers, Horst**
   **Im Heimbachtal 46**
   **W-6208 Bad Schwalbach 6(DE)**

**Beschreibung**

Die Erfindung betrifft eine Beleuchtungseinrichtung in einem Projektionskopiergerät zum Ausleuchten und zur Projektion einer Vorlage auf ein lichtempfindliches Aufzeichnungsmaterial, mit einer Vorlagenbühne für die Aufnahme der Vorlage, mit zumindest einer Strahlungsquelle, die von einem aus zwei Reflektorteilen bestehenden Reflektor teilweise umgeben ist, die an einer Trennstelle miteinander verbunden und voneinander lösbar sind und die einfallende Strahlung in Richtung der Vorlage reflektieren.

Eine derartige Beleuchtungseinrichtung ist aus der Druckschrift DE-A - 32 25 103 bekannt, die eine einzige Belichtungsquelle mit einem Reflektor zeigt, der in eine obere und untere Hälfte unterteilt ist, die mittels eines Verbindungselements miteinander verbunden sind und voneinander getrennt werden können. Bei dieser Beleuchtungseinrichtung sind keine Vorkehrungen getroffen, die Wärmestrahlung der Belichtungsquelle auszuschalten. Ebensowenig sind mehrere Belichtungsquellen zum Erreichen einer größtmöglichen Belichtung innerhalb kürzester Zeit vorhanden.

Aus der DE-PS 24 52 979 ist eine Beleuchtungseinrichtung bekannt, bei der an den Längsseiten symmetrisch zur Mittellinie der Beleuchtungseinrichtung zwei Strahlungsquellen angeordnet sind, die von Spiegelreflektoren teilweise umgeben sind, welche die einfallende Strahlung in Richtung weiterer Reflektoren reflektieren. Es sind zwei weitere, von Spiegelreflektoren teilweise umgebene Strahlungsquellen an den Breitseiten eines Aufsatzes vorhanden, die eine Eingangsöffnung eines Balges umschließt, an dessen Langsseiten die zuvor erwähnten Strahlungsquellen mit den zugehörigen Spiegelreflektoren vorgesehen sind. Die weiteren Reflektoren sind gleichfalls als Spiegelreflektoren mit einem ebenen streifenförmigen mittleren Abschnitt ausgebildet, an den zu beiden Seiten konkav gekrümmte Abschnitte anschließen, die sich über die Tiefe der Beleuchtungseinrichtung erstrecken. Die Spiegelreflektoren und die unteren gekrümmten Abschnitte der weiteren Reflektoren liegen sich gegenüber, wobei die weiteren Spiegelreflektoren in Richtung Vorlagenhalter zur Gänze von einem Flansch abgedeckt sind, der entlang des Randes des Aufsatzes nach außen vorspringt. Durch das Abdecken der weiteren Spiegelreflektoren durch einen Flansch wird erreicht, daß bei der Beleuchtung der Vorlage eine Abbildung derselben auf das Aufzeichnungsmaterial unter Vermeidung der Schattenbilder der Vorlagenkante und ohne Verringerung der Lichtausbeute erhalten wird.

Diese bekannte Beleuchtungseinrichtung weist keine Vorkehrungen auf, die Wärmestrahlung der Strahlungsquellen von der Vorlage fernzuhalten.

Werden besonders leistungsstarke Strahlungsquellen verwendet, wie dies bei Projektionskopiergeräten für einen großen Durchsatz an Aufzeichnungsmaterialien, wie beispielsweise Druckplatten, der Fall ist, so ist die Wärmeentwicklung innerhalb der Beleuchtungseinrichtung erheblich, und es kann dann zu einem entsprechenden Aufheizen der Vorlagenbühne und der jeweiligen Vorlage kommen, wodurch unerwünschte Wärmespannungen im Vorlagenhalter, der im allgemeinen eine Glasplatte aufweist, auftreten können, welche die Projektionsgenauigkeit auf das Aufzeichnungsmaterial negativ beeinflussen können.

In der US-PS 3,428,397 ist ein Kopiergerät beschrieben, bei dem symmetrische Anordnungen von Lichtreflektoren das Licht auf eine Vorlage projizieren. Jede Anordnung weist einen gekrümmten Spiegelreflektor auf, der eine längsgestreckte Lichtquelle teilweise umgibt, sowie eine nicht entspiegelte, das Licht diffus verteilende Oberfläche zwischen der Lichtquelle und der Vorlagenbühne.

Die gekrümmten Spiegelreflektoren bestehen aus zwei zusammenhängenden Teilen, die voneinander unterschiedliche Krümmungen besitzen. An jeden der Spiegelreflektoren schließt nach obenhin eine nicht spiegelnde, diffus reflektierende Wand an, die gegenüber der Längsachse der Beleuchtungseinrichtung nach außen geneigt ist. Ebenso setzt sich jeder gekrümmte Reflektor nach unten hin in eine nicht spiegelnde, diffus reflektierende Wand fort, die gleichfalls gegenüber der Längsachse der Beleuchtungseinrichtung geneigt ist und mit ihrem unteren Ende an der optischen Linse anliegt. Die Neigung der unteren Wand gegenüber der Längsachse ist größer als die der oberen Wand. Der untere Teil des Spiegelreflektors reflektiert Licht auf die gegenüberliegende obere Wand, während der obere Teil jedes Spiegelreflektors Licht auf die gegenüberliegende untere Wand reflektiert. Das auf die Wände auftreffende Licht wird v on diesen diffus in alle Richtungen reflektiert. Ein Teil des Lichtes von den Spiegelreflektoren wird auch direkt auf die Vorlagenbühne gelenkt. Diese wird somit von Licht beleuchtet, das von den Spiegelreflektoren direkt reflektiert wird und von diffusem Licht, das nach mehrfachen Reflexionen an den diffus reflektierenden Wänden auf die Vorlagenbühne abgestrahlt wird. Neben den geneigten, diffus reflektierenden Wänden weist diese Beleuchtungseinrichtung auch vertikale Seitenwände auf, die hochreflektierend sind. Die auf diese vertikalen Wände auftreffenden Lichtstrahlen werden nach entsprechender Reflexion nicht auf die Linse umgelenkt, da sie durch entsprechende Teile der Spiegelreflektoren abgedeckt werden. Ein gewisser Anteil des diffus reflektierten Lichts, der auf die Vorlagenbühne auftrifft, wird direkt in Richtung der Linse reflektiert. Doch hat es sich gezeigt, daß diese Spiegelreflexion einen derart geringen Anteil an der Gesamtreflexion der diffus beleuchteten Vorlage auf der Vorlagenbühne ausmacht, daß eine Beeinträchtigung der Kopienqualität durch Auftreten von Streifen oder punktförmigen Abbildungen in der Kopie vernachlässigbar klein ist. Bei dieser Beleuchtungsvorrichtung wird zwar eine unmittelbare Beleuchtung der Vorlagenebene durch die Lichtquelle durch die zur Mitte hin gezogenen Oberteile der Spiegelreflektoren vermieden, nicht jedoch eine Beleuchtung der Ränder der Vorlagenebene durch von den Spiegelreflektoren direkt reflektiertes Licht. Der räumliche Abstand der Lichtquellen von der Vorlagenebene ist ungleich der Tiefe der Beleuchtungseinrichtung. Die diffus reflektierenden Wände umgeben die optische Linse zur Abbildung der Vorlage auf einen Bildträger. Die entlang einer Seite der Beleuchtungsvorrichtung angeordneten reflektierenden Elemente, nämlich die obere Wand, der Spiegelreflektor und die untere Wand schließen ohne Unterbrechung aneinander an und liegen sich mit ihren reflektierenden Oberflächen nicht gegenüber. Durch die spezielle Ausgestaltung des einzelnen Spiegelreflektors, der aus zwei Teilen mit unterschiedlichen Krümmungen besteht, ist sowohl die Herstellung aufwendig als auch teuer. Da die oberen und unteren Wände nur diffus und nicht spiegelnd reflektieren, ist die Lichtausbeute zum Beleuchten der Vorlage im Vergleich zur Strahlungsleistung der Lichtquellen gering.

Aus der US-Patentschrift 3,272,066 ist eine Beleuchtungseinrichtung bekannt, die vier Lampen in den vier Ecken einer Kammer des Projektionskopiergeräts aufweist, die einem Vorlagenfenster gegenüber liegen. In Front jeder Lampe ist eine Ablenkplatte befestigt, die verhindert, daß das Licht der betreffenden Lampe direkt auf das Vorlagenfenster einfällt und von dort auf eine Linsenoptik reflektiert wird. Die ebenen Seitenwände der Kammer sind reflektierend ausgebildet und lenken das Lampenlicht auf das Vorlagenfenster um. Die vier Lampen dieser Beleuchtungseinrichtung lenken im Zusammenwirken mit den vorgeschalteten Ablenkplatten bevorzugt Licht in die Ecken des Vorlagenfensters. Die Ablenkplatten vor den Lampen verhindern nur eine direkte Abstrahlung der Lichtstrahlen in das Zentrum des Vorlagenfensters, nicht jedoch in dessen Ecken, da es ein erklärtes Ziel der bekannten Beleuchtungseinrichtung ist, in den Ecken die Lichtintensität gegenüber dem Zentrum zu erhöhen. Durch den Einsatz von jeweils einer eigenen Ablenkplatte für jede Lampe ist der konstruktive Aufwand groß.

Die DE-OS 21 60 439 beschreibt eine Beleuchtungseinrichtung, bei der Reflektoren das Licht von Lichtquellen auf eine lichtdurchlässige Aufnahmeplatte für die Vorlage werfen. Bei dieser Beleuchtungseinrichtung sind keine Maßnahmen getroffen, eine direkte Beleuchtung der Vorlage und eine Reflexion des einfallenden Lichtes von den ersten Reflektoren auf die Vorlage zu vermeiden, um eine vollkommen schattenfreie Kantenausleuchtung der Vorlage zu erhalten. Um dies zu erreichen, sind vielmehr zusätzliche Lichtquellen vorgesehen, die die Schatten auf dem Aufzeichnungsmaterial löschen, die durch die Randgebiete der Vorlage verursacht werden.

Die schweizerische Patentschrift 489 818 betrifft eine Belichtungsvorrichtung mit einem Reflektorsystem, dessen einzelne Teilreflektoren die Wandteile des Gerätegehäuses bilden. Dabei ist die Lichtquelle in einem seitlich versetzten Querschnitt der Vorrichtung in bezug auf den Vorlagenhalter angeordnet. Wegen der seitlichen Anordnung der Lichtquelle ergeben sich zwar kaum Probleme beim Vermeiden der Direktausleuchtung der Vorlage durch die Lichtquelle, jedoch sind mehrere Reflektoren erforderlich, um die gesamte, von der Lichtquelle abgegebene Strahlung auf die Belichtungsöffnung lenken zu können, um eine zufriedenstellende Lichtausbeute zu erhalten. Die Überlagerung dreier Lichtanteile bei diesem Teilreflektorensystem ergibt einen größeren Ausstrahlwinkel im Vergleich zu einem bzw. zwei Reflektoren, wodurch die Ausleuchtung einer größeren Vorlagenfläche ermöglicht wird, da die gesamte Vorlagenfläche einschließlich ihrer Randbereiche ausreichend erhellt wird. Hierzu lenkt sowohl ein Umlenkreflektor als auch ein Stufenreflektor die einfallende Strahlung direkt in Richtung Vorlage um, wobei eine Reflexion über einen zweiten Reflektor nicht stattfindet. Der konstruktive Aufwand bei dieser Vorrichtung ist unverhältnismäßig groß.

Aus der DE-OS 21 39 326 ist eine Beleuchtungsvorrichtung bekannt, bei der für die Beleuchtung der Vorlagenebene vier in einer Ebene und symmetrisch zur Vorlage angeordnete Lichtquellen vorhanden sind. Diese Lichtquellen strahlen unter anderem direkt die Vorlage an, so daß die Abbildung der Schatten der Vorlagenkanten auf der Kopie nicht auszuschließen ist.

In der Literaturstelle "Die wissenschaftliche und angewandte Photographie", Verfasser: K. Michel, Springer-Verlag 1973, (6. Band, Laufbildprojektion, S. 166, 167 und 170) ist ausgeführt, den Infrarot-Anteil der Strahlung nicht auf einen Film gelangen zu lassen und von dem sichtbaren Lichtanteil durch einen Filter im Strahlengang abzutrennen, wobei der Filter die Wärmestrahlung entweder absorbiert oder reflektiert.

Bei den bekannten Beleuchtungsvorrichtungen sind jedoch keine Maßnahmen getroffen, den Infrarotanteil, d.h. die Wärmestrahlen der Strahlungsquellen von der Vorlage fernzuhalten und zugleich eine vollkommen schattenfreie Kantenausleuchtung der Vorlage zu erhalten, unter Vermeidung einer direkten Reflexion bei-spielsweise durch die Glasplatte des Vorlagenhalters in Richtung der Optik. Von Nachteil ist es auch bei den bekannten Beleuchtungsvorrichtungen, daß das Auswechseln einer Strahlungsquelle wegen der zum Teil aufwendigen Konstruktion der Beleuchtungseinrichtungen zeitraubend ist.

Aufgabe der Erfindung ist es, eine Beleuchtungseinrichtung der eingangs beschriebenen Art so zu verbessern, daß ein schneller Wechsel der einzelnen Strahlungsquelle ohne langwierige Justierarbeiten möglich ist und daß bei der Beleuchtung der Vorlage die Wärmestrahlung der Strahlungsquellen nicht auf die Vorlage auftrifft.

Diese Aufgabe wird erfindungsgemäß dadurch gelöst, daß jede der Strahlungsquellen mit dem bzw. den sie umgebenden Wärmeschutzfilter(n) und Reflektorblech Bestandteil einer Strahlereinheit ist, die eine Halterung für die Wärmeschutzfilter und eine weitere Halterung für die Strahlungsquellen aufweist, daß die Wärmeschutzfilter den Infrarotanteil der Strahlung der Strahlungsquelle in Richtung Strahlungsquelle reflektieren und die übrigen Strahlungsanteile durchlassen und gegenüber den Strahlungsquellen und Reflektoren so positioniert sind, daß jeder Strahl vor dem Auftreffen auf die Vorlage eines der Wärmefilter passiert, daß die Halterung einen Ausschnitt aufweist, durch den sich ein Block erstreckt, der an der weiteren Halterung lösbar befestigt ist und die Strahlungsquelle trägt und daß jeder der beiden Reflektorteile an der Trennstelle eines Reflektors mit einem Vierkantprofil ausgestattet ist, wobei die aneinander anliegenden Vierkantprofile durch einen Paßdorn miteinander verbunden sind.

Die weitere Ausgestaltung einer ersten Ausführungform der Erfindung ergibt sich aus den kennzeichnenden Merkmalen der Patentansprüche 2 bis 11.

Um in der Bildebene einen Abfall der Beleuchtungsstärke zu den Bildrändern hin zu vermeiden, ist bei einer zweiten Ausführungsform jede Strahlungsquelle an den beiden Breitseiten der Beleuchtungseinrichtung von drei Wärmeschutzfiltern und jede Strahlungsquelle an den beiden Längsseiten der Beleuchtungseinrichtung von je einem Reflektorblech und zwei Wärmeschutzfiltern umgeben.

Die Weiterbildung der zweiten Ausführungsform ergibt sich aus den Patentansprüchen 13 bis 17.

Durch die Beleuchtung der Vorlage mit Licht, aus dem die Wärmestrahlen herausgefiltert sind bzw. in Richtung Strahlungsquellen reflektiert werden und von dort mittels Ventilatoren die erwärmte Luft aus der Beleuchtungseinrichtung abtransportiert wird, ergibt sich der Vorteil einer gleichmäßigen Temperierung des Vorlagenhalters unter Vermeidung einer allmählichen Aufheizung bei längerem Betrieb der Beleuchtungseinrichtung und somit eine gleichbleibende Qualität der von der Vorlage angefertigten Kopien. Als weiterer erheblicher Vorteil kommt hinzu, daß die einzelnen Reflektoren aus zwei Reflektorteilen bestehen, die an einer Trennstelle voneinander lösbar sind, so daß bei dem Ausfall einer Strahlungsquelle der entsprechende Reflektorteil, mit dem die Strahlungsquelle verbunden ist, von dem anderen Reflektorteil getrennt und weggeschoben werden kann, um leichten Zugang zu den Strahlereinheiten zu haben, so daß ein schnelles Auswechseln der schadhaften Strahlungsquelle möglich ist.

Durch den Ersatz je eines Wärmeschutzfilters durch ein Reflektorblech in den Strahlereinheiten, die entlang den Längsseiten der Beleuchtungseinrichtung angeordnet sind, wird der Vorteil erzielt, daß eine Lichtverteilung in der Vorlagenebene erzielt wird, die an den Vorlagenrändern und den Vorlagenecken eine höhere Beleuchtungsstärke als im Zentrum ergibt, wodurch dann bei der Abbildung der Vorlage in die Bildebene sichergestellt ist, daß die durch das Objektiv verursachte Helligkeitsabnahme gegenüber dem Zentrum kompensiert und eine gleichmäßige Beleuchtungsstärke in der Bildebene erhalten wird.

Die Erfindung wird im folgenden anhand eines zeichnerisch dargestellten Ausführungsbeispiels näher erläutert.

Es zeigen:

Fig. 1 eine horizontale Schnittansicht der Beleuchtungseinrichtung nach der Erfindung,

Fig. 2 eine Schnittansicht der Beleuchtungseinrichtung entlang der Linie II in Fig. 1,

Fig. 3 eine Seitenansicht einer Strahlereinheit,

Fig. 4 eine Vorderansicht der Strahlereinheit nach Fig. 3,

Fig. 5 im vergrößerten Maßstab einen Reflektor der Beleuchtungseinrichtung, sowie im Detail eine Aufsicht auf eine Führung, entlang der die einzelne Strahlereinheit verschiebbar ist.

Fig. 6 Reflektorbleche der Strahlereinheiten, die an den Längsseiten der Beleuchtungseinrichtung angeordnet sind, und

Fig. 7 die Beleuchtungsstärke in verschiedenen Punkten eines Vorlagenformats.

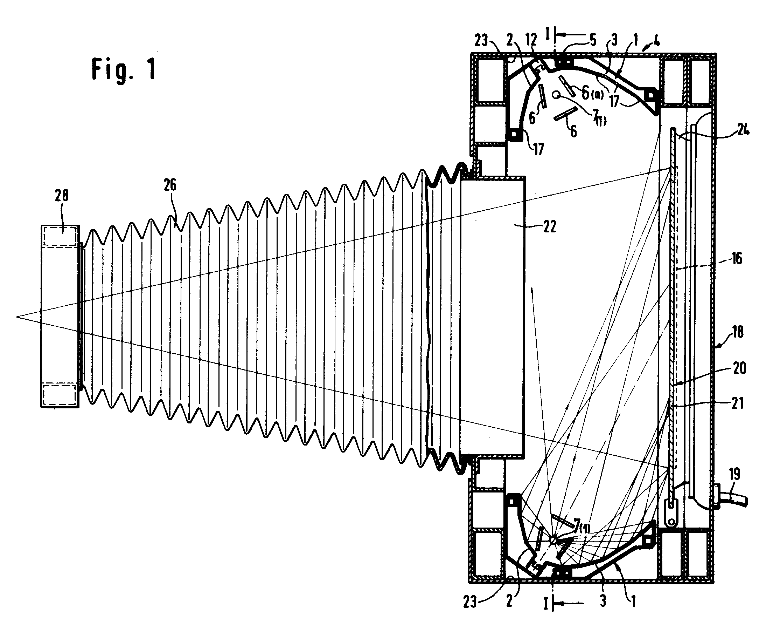

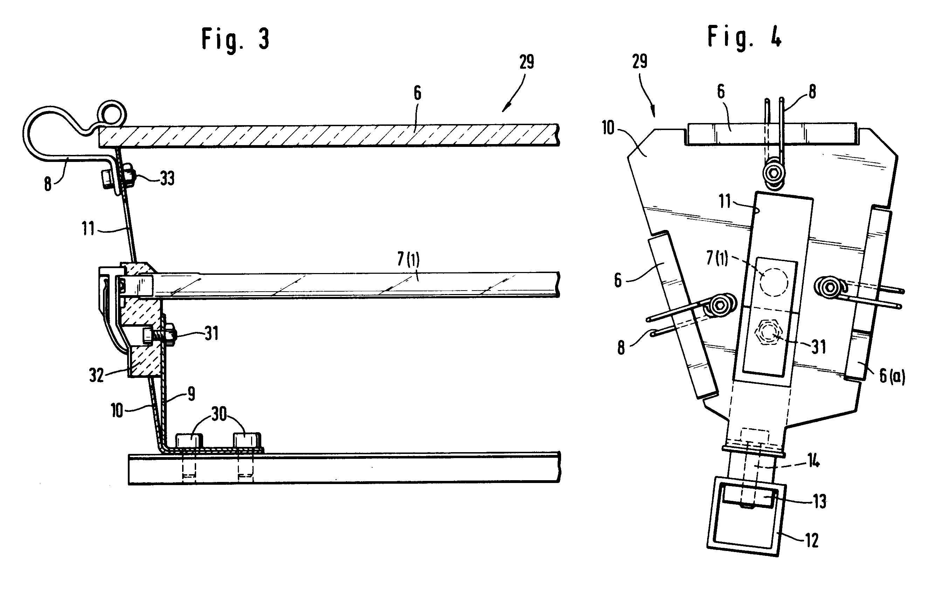

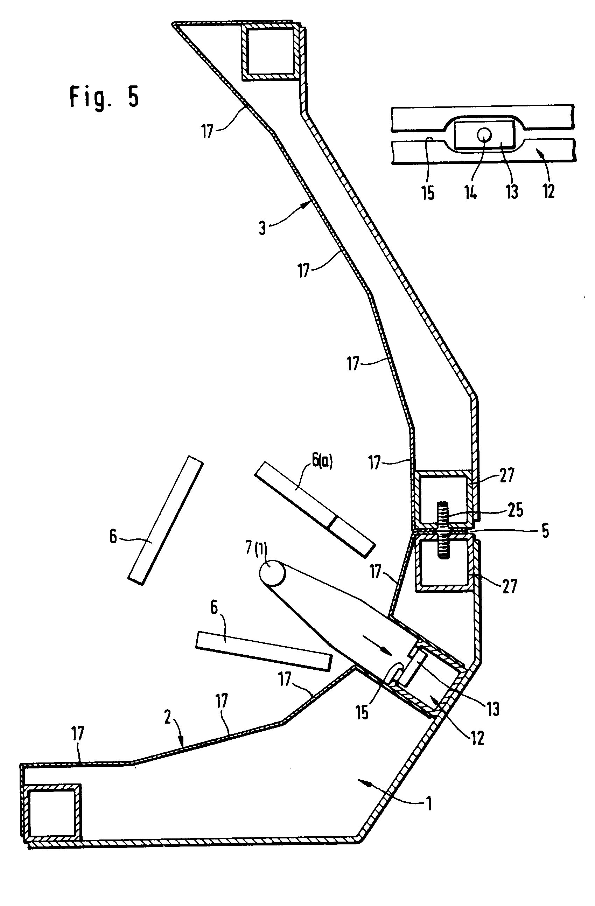

In jeder der Figuren 1 bis 5 sind zwei Ausführungsformen der Beleuchtungseinrichtung dargestellt, die sich nur durch die Strahlungsquellen entlang den Längsseiten, von denen jede von zwei Wärmeschutzfiltern 6,6 und einem Reflektorblech 6a (6b bzw. 6c) anstelle eines weiteren Wärmeschutzfilters 6 umgeben ist, voneinander unterscheiden, ansonsten aber weitgehend identisch sind. Zur zeichnerischen Unterscheidung der beiden Ausführungsformen sind in den Figuren 1 bis 5 die Indizes 1,2,3 der Strahlungsquellen $7_1$, $7_2$, $7_3$ und der Index a des Reflektorblechs 6a der zweiten Ausführungsform in Klammern gesetzt. Für die erste Ausführungsform gelten die Bezugszahlen unter Fortfall der in Klammern gesetzten, voranstehend angeführten Indizes, d.h. die Strahlenquellen sind einheitlich mit der Bezugzahl 7 und die Wärmeschutzfilter mit der Bezugzahl 6 belegt. In den Figuren 4 und 5 ist jeweils bei der zweiten Ausführungsform die abgeschrägte obere Kante des Reflektorblechs 6a als Parallelstrich zu den Schmalseiten des Reflektorblechs eingezeichnet. Bei Austausch des Reflektorblechs 6a gegen ein Wärmeschutzfilter 6 muß man sich diese eingezeichnete Kante bei der ersten Ausführungsform als nicht vorhanden vorstellen.

Im Inneren der in Fig. 1 dargestellten ersten Ausführungsform der Beleuchtungseinrichtung 4 sind Strahlungsquellen 7 in einem bestimmten Abstand von der lichtreflektierenden Oberfläche eines Reflektors 1 angeordnet. Die Strahlungsquellen 7, beispielsweise Brenner, sind von Wärmeschutzfiltern 6 in einer Weise umgeben, daß jeder auf eine Vorlage 16 auftreffende Strahl eines der drei Wärmeschutzfilter 6 zuvor passiert hat. Die gegenseitige Lage der einzelnen Strahlungsquelle 7 und der zugehörigen Wärmeschutzfilter 6 einerseits und des Reflektors 1 andererseits ist derart, daß die direkt auf die Vorlage 16 auftreffenden Strahlen, d.h. die nicht reflektierten Strahlen, eines der Wärmeschutzfilter 6 durchsetzt haben und des weiteren die erst nach Reflexion an dem Reflektor 1 auf die Vorlage 16 auftreffenden Strahlen eines der beiden übrigen Wärmeschutzfilter 6 schon vor der Reflexion an der Oberfläche des Reflektors 1 durchsetzt haben. Bei den Wärmeschutzfiltern handelt es sich um an sich bekannte Filter für derartige Zwecke, so daß von einer näheren Beschreibung der Filter abgesehen wird. Die Wärmeschutzfilter 6 reflektieren den Infrarotanteil bzw. die Wärmestrahlen der auftreffenden Strahlung der einzelnen Strahlungsquelle 7 auf diese zurück, so daß nur der sogenannte Kaltlichtanteil das Wärmeschutzfilter 6 passieren kann und entweder direkt auf die Vorlage 16 oder nach Reflexion an der Oberfläche des Reflektors 1 auf die Vorlage 16 auftrifft. Die durch die reflektierte Wärmestrahlung aufgeheizte Luft um die Strahlungsquellen 7 wird durch nicht dargestellte Ventilatoren aus der Beleuchtungseinrichtung 4 abgeführt, so daß eine zu starke Erwärmung der Strahlungsquellen 7 verhindert wird.

Wie aus den schematisch eingezeichneten Strahlengängen in Fig. 1 ersichtlich ist, treffen die einzelnen Strahlen auf die Vorlage 16 unter einem derartigen Winkel auf, daß eine direkte Reflexion der Strahlen in Richtung einer Austrittsöffnung 22 eines Faltenbalgs 26, an dessen der Austrittsöffnung 22 gegenüberliegendem Ende ein Verschluß 28 für eine Optik angeordnet ist, nicht stattfindet. Insofern wird die Vorlage 16 durch die Beleuchtungseinrichtung 4 in einer Weise ausgeleuchtet, bei der eine direkte Reflexion, beispielsweise durch eine Glasabdeckung 21 eines Vorlagenhalters 20 in Richtung der nicht dargestellten Optik vermieden wird.

Entlang jeder Seitenwand 23 der Beleuchtungseinrichtung 4 ist ein Reflektor 1 angeordnet, der jeweils aus zwei Reflektorteilen 2 und 3 besteht, die an einer Trennstelle 5 voneinander lösbar sind, wie später noch näher beschrieben werden wird. Der einzelne Reflektor 1 bzw. die Reflektorteile 2 und 3 bestehen aus planen Reflektorsegmenten 17, wobei zwei aneinanderstoßende Reflektorsegmente 17,17 miteinander einen Winkel zwischen 14° bis 22° einschließen. Der Reflektorteil 2 weist eine Führung 12 auf, in der die einzelne Strahlereinheit 29 (vgl. Fig. 3 und 4), bestehend aus einer Strahlungsquelle 7 und den zugehörigen drei Wärmeschutzfiltern 6 eingefügt und positionierbar ist.

Als Material für die Reflektorsegmente 17 werden geprägte Bleche verwendet, deren Oberflächen zum Schutz gegen Oxidation versiegelt sind. Hierfür sind besonders Aluminiumbleche geeignet, die mit Reinstaluminium plattiert sind.

Die Abstände der Strahlungsquellen 7 von der Vorlagenebene liegen im Bereich von 270 bis 295 mm, insbesondere beträgt der Abstand 280 mm. Der Abstand einer zu einer Strahlungsquelle nächstgelegenen Vorlagenkante beträgt 165 bis 175 mm, insbesondere 170 mm. Durch das Einhalten der gegenseitigen Lage von Vorlagenebene, Vorlagenkante und Strahlungsquellen ist sichergestellt, daß das von jedem Reflektorsegment 17 reflektierte Licht die ganze Formatlänge bzw. -breite der Vorlage 16 überstreicht. Als Folge der Segmentierung der Reflektoren 1 ist es möglich, nach entsprechender Wahl der Winkel, die die einzelnen Reflektorsegmente miteinander einschließen, das von einem oder mehreren Reflektorsegmenten reflektierte Licht auf einen engeren Bereich zu konzentrieren, um eventuell vorhandene "Lichtlöcher", das sind Bereiche, in denen die Beleuchtung geringer als in den umgebenden Bereichen ausfällt, auszugleichen, d.h. die "Lichtlöcher" mit der gleichen Lichtintensität zu beleuchten wie die übrigen Bereiche. Schatten der Vorlagekanten werden durch die stark schräg auftreffenden Strahlen der vorderen Reflektorsegmente weitgehend ausgeleuchtet.

Anstelle von drei einzelnen planaren Wärmeschutzfiltern 6 kann auch ein einzelnes rohrförmiges Wärmeschutzfilter, beispielsweise aus, mit IR-reflektierender Schicht versehenem Duran [R]-Glas die Strahlungsquelle 7 umgeben und die von der Quelle 7 abgegebene Wärmestrahlung zurückhalten. Dieses nicht dargestellte Wärmeschutzfilter in Gestalt eines Glasrohrs kann z.B. an zwei Aufpunkten eines Sockels, der die Strahlungsquelle trägt, aufliegen und durch eine Feder in seiner Lage gehalten werden.

Die Beleuchtungseinrichtung 4 besitzt zusätzlich zu den Strahlungsquellen 7 eine nicht dargestellte Strahlungsquelle, gleichfalls ein Brenner, für die direkte Durchstrahlung einer Vorlage, wie eines Transparentfilms und dessen Projektion durch den Balg 26 hindurch über die Optik auf das Aufzeichnungsmaterial. Diese zusätzliche Strahlungsquelle ist aus Gründen der besseren Übersichtlichkeit in der Beleuchtungseinrichtung nicht eingezeichnet, denn in diesem Zusammenhang ist dazu nur festzustellen, daß diese Strahlungsquelle motorisch über den Vorlagenhalter 20 verfahren wird, um die Vorlage 16 zu durchstrahlen.

Die Beleuchtungseinrichtung ist beispielsweise auf Vorlagengrößen bis zu 500 × 710 mm eingerichtet. Die Belichtungszeiten für Auflicht, bei dem die Vorlage durch die Strahlungsquellen 7 im Zusammenwirken mit den Reflektoren 1 ausgeleuchtet wird, betragen 5 bis 6 sec., Etwa ein Drittel der benötigten Belichtungszeit der in der DE-PS 24 52 979 beschriebenen Beleuchtungseinrichtung mit Lichtquellen der gleichen Beleuchtungsstärke.

Für eine Durchlichtprojektion, bei welcher der Transparentfilm als Vorlage durch den einen, über die Vorlagenbühne verfahrenen Halogenstrahler auf das Aufzeichnungsmaterial projiziert wird, beträgt die Belichtungszeit etwa 4 sec.

Der Vorlagenhalter 20 ist in der Rückseite einer Klapptür 18 der Beleuchtungseinrichtung 4 für die Aufnahme der Vorlage angeordnet. Der Vorlagenhalter 20 ist wahlweise mit oder ohne Saugvorrichtung ausgerüstet und über eine Leitung 19 an eine nicht dargestellte Vakuumpumpe angeschlossen. Zum glatten Anpressen der Vorlage 16 an die Fläche des Vorlagenhalters 20 ist die Glasabdeckung 21 vorgesehen, die auf einer umlaufenden Abdichtung 24 aufliegt. Ein nicht gezeigter Gasdruckdämpfer stützt die geöffnete Glasabdeckung 21 gegen die Klapptür 18 ab und sorgt dafür, daß die geöffnete Glasabdeckung in ihrer jeweiligen Stellung verharrt, so daß ohne jede Behinderung die Vorlage 16 in den Vorlagenhalter 20 eingelegt werden kann. Die Klapptür 18 steht im übrigen über einen weiteren, nicht gezeigten Gasdruckdämpfer mit dem Gehäuse der Beleuchtungseinrichtung 4 in Verbindung, wobei der Gasdruckdämpfer die von Hand ausgeführten Schließ- bzw. Öffnungsbewegungen der Klapptür 18 unterstützt.

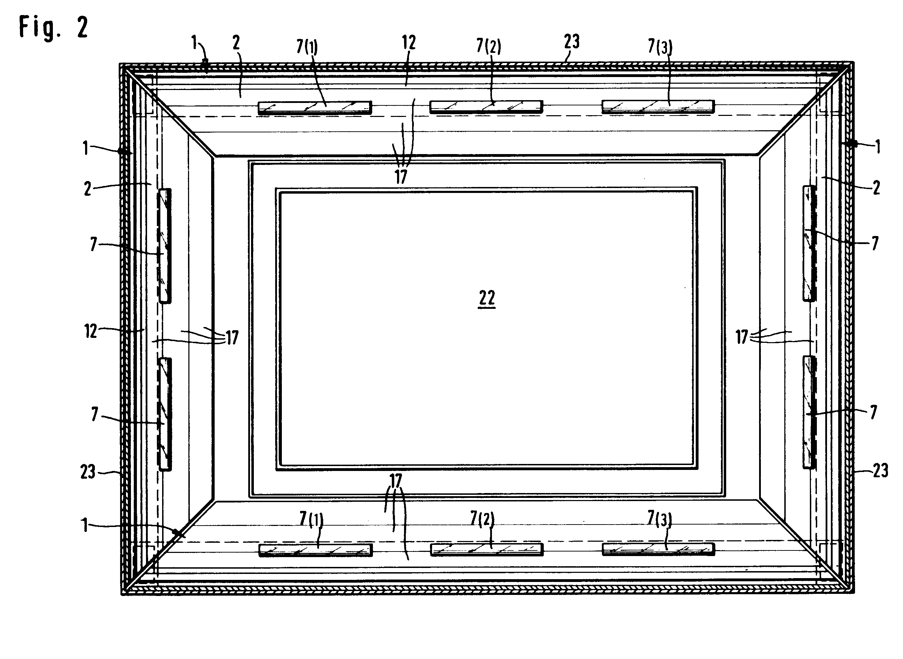

Wie aus Fig. 2 ersichtlich ist, sind bei der ersten Ausführungsform je drei Strahlungsquellen 7 an jeder Längsseite und je zwei Strahlungsquellen 7 an jeder Breitseite der Beleuchtungseinrichtung 4 symmetrisch zu den gedachten Mittellinien in Längs- bzw. Breitenrichtung angeordnet.

Die zweite Ausführungsform der Beleuchtungseinrichtung weist je drei Strahlungsquellen $7_1$, $7_2$, $7_3$ an den Längsseiten und je zwei Strahlungsquellen 7 an den Breitseiten der Beleuchtungseinrichtung in gleicher Anordnung wie die erste Ausführungsform auf.

Die Reflektoren 1 der Längs- und Breitseiten sind bei beiden Ausführungsformen an ihren Stoßstellen unter 45°-Gehrung bis auf einen Spalt von 2 bis 3 mm zusammengefügt. Diese Stoßfuge von 2 bis 3 mm Breite ermöglicht eine gewisse thermische Dehnung der sich während längeren Betriebs aufheizenden Reflektoren 1, ohne daß es zu thermischen Spannungen und Verformungen der Reflektoren 1 kommt. Die Seitenwände 23 des Gehäuses der Beleuchtungseinrichtung 4 sind matt schwarz, so daß sie eventuell einfallende Strahlung absorbieren. Die Austrittsöffnung 22 des Kamerabalgs 26 besitzt einen rechteckförmigen Querschnitt, der aus Fig. 2 ersichtlich ist.

Die in Seitenansicht in Fig. 3 gezeigte Strahlereinheit 29 der ersten Ausführungsform besteht aus je einer Strahlungsquelle 7 und den sie umgebenden drei Wärmeschutzfiltern 6. Die Strahlungsquelle 7 ist in einem Block 32 befestigt, der mittels einer Schraube 31 mit einer winkelförmigen Halterung 9 verschraubt ist. Der Block 32 durchsetzt einen Ausschnitt 11 einer Halterung 10 für die drei Wärmeschutzfilter 6. Jedes der Wärmeschutzfilter 6 wird durch eine gebogene Haltefeder 8, die über eine Schraube 33 mit der Halterung 10 verschraubt ist, in seiner Position gehalten. Wie die Vorderansicht gemäß Fig. 4 der Strahlereinheit 29 erkennen läßt, ist jedes der Wärmeschutzfilter 6 in einem Randausschnitt der Halterung 10 eingepaßt, so daß ein seitliches Verrutschen nicht möglich ist.

Die gleichfalls in Seitenansicht in Fig. 3 gezeigte Strahlereinheit 29 der zweiten Ausführungsform, die an einer der Längsseiten der Beleuchtungseinrichtung 4 angeordnet ist, besteht aus einer Strahlungsquelle $7_1$ und den sie umgebenden zwei Wärmeschutzfiltern 6 sowie einem Reflektorblech 6a, das anstelle des dritten Wärmeschutzfilters der ersten Ausführungsform vorgesehen ist. Die Strahlungsquelle $7_1$ ist in einem Block 32 befestigt, der mittels einer Schraube 31 mit einer winkelförmigen Halterung 9 verschraubt ist. Der Block 32 durchsetzt einen Ausschnitt 11 einer Halterung 10 für die zwei Wärmeschutzfilter 6 und das Reflektorblech 6a. Jedes der beiden Wärmeschutzfilter 6 und das Reflektorblech 6a werden durch eine gebogene Haltefeder 8, die über eine Schraube 33 mit der Halterung 10 verschraubt ist, in ihren Positionen gehalten. Wie die Vorderansicht gemäß Fig. 4 der Strahlereinheit 29 erkennen läßt, sind die Wärmeschutzfilter 6 und das Reflektorblech 6a jeweils in einem Randausschnitt der Halterung 10 eingepaßt, so daß ein seitliches Verrutschen nicht möglich ist.

Die Halterung 9 sowie die gleichfalls winklige gebogene Halterung 10 für beide Ausführungsformen liegen mit ihren horizontal verlaufenden Biegeteilen übereinander und werden durch Schrauben 30 mit einer nicht näher bezeichneten Schiene der Strahlereinheit 29 verbunden.

Diese Schiene ist in eine Führung 12 in Gestalt eines Vierkantprofils einsetzbar und entlang dieser Führung verschieb- und positionierbar, wie dies anhand von Fig. 5 näher erläutert wird.

Wie Fig. 5 zeigt, ist die Führung 12 in denjenigem Reflektorteil 2 des Reflektors 1 angeordnet, der weiter weg von dem Vorlagenhalter 20 für die Vorlage 16 als der Reflektorteil 3 liegt. Die Zahl der Reflektorsegmente 17 der Reflektorteile 2 und 3 beträgt jeweils vier. Im allgemeinen sind die Reflektorsegmente 17, 17,.. unterschiedlich lang. Vier der Reflektorsegmente 17 können auch paarweise gleichlang sein, d.h. je zwei Reflektorsegmente haben dann die gleiche Länge, wobei jedoch die einzelnen Paare zueinander wieder unterschiedliche Längen aufweisen.

Die Führung 12, die, wie schon erwähnt, ein Vierkantrohr ist, weist einen eingefrästen Schlitz 15 auf, durch den die Schiene jeder Strahlereinheit 29 eingesetzt und darin verschoben werden kann. Der Schlitz 15 der Führung 12 besitzt jeweils an seinen Enden eine Aufweitung, durch die ein Klötzchen 13 mit einer Breite größer als die Schlitzbreite einschiebbar ist. Das Klötzchen 13 ist mit einer Schraube 14 im Eingriff, die den Schlitz 15 durchsetzt und mit der Unterseite ihres Schraubenkopfes auf der Schiene der Strahlereinheit 29 aufliegt. Wird die Schraube 14 gelöst, so kann die Schiene entlang dem Schlitz 15 verschoben werden. Sobald die vorgegebene Position der einzelnen Strahlereinheit 29 erreicht ist, wird die Schraube 14 angezogen, so daß das Klötzchen 13 von unten gegen die geschlitzte Seite des Vierkantprofils der Führung 12 anliegt und somit die Strahlereinheit 29 in ihrer Position fixiert wird. Die Aufweitung des Schlitzes 15 ist in Fig. 5 im Detail in Draufsicht gezeigt.

Zur Erleichterung der Justierung der einzelnen Strahlereinheit 29 und des Auswechselns von defekten Strahlungsquellen 7 sind die beiden Reflektorteile 2 und 3 an der Trennstelle 5 des einzelnen Reflektors 1 voneinander lösbar. Dazu ist an der Trennstelle jeder der Reflektorteile 2 und 3 mit einem Vierkantprofil 27 ausgestattet und die aneinander anliegenden Seitenflächen der beiden Vierkantprofile sind durch einen Paßdorn 25 miteinander verbunden. Dies ergibt eine leicht lösbare Steckverbindung der beiden Reflektorteile 2 und 3, so daß bei einem Auswechseln der einzelnen Strahlereinheiten 29 nur der Reflektorteil 2 aus dem Gehäuse der Beleuchtungseinrichtung 4 nach dem Lösen an der Trennstelle 5 verschoben werden muß, während der andere Reflektorteil 3 an Ort und Stelle bleibt. Die im Reflektorteil 2 angeordneten Strahlungsquellen 7 bzw. $7_1$, $7_2$, $7_3$ der Strahlereinheiten 29 können dann ohne großen Zeitaufwand ausgewechselt werden.

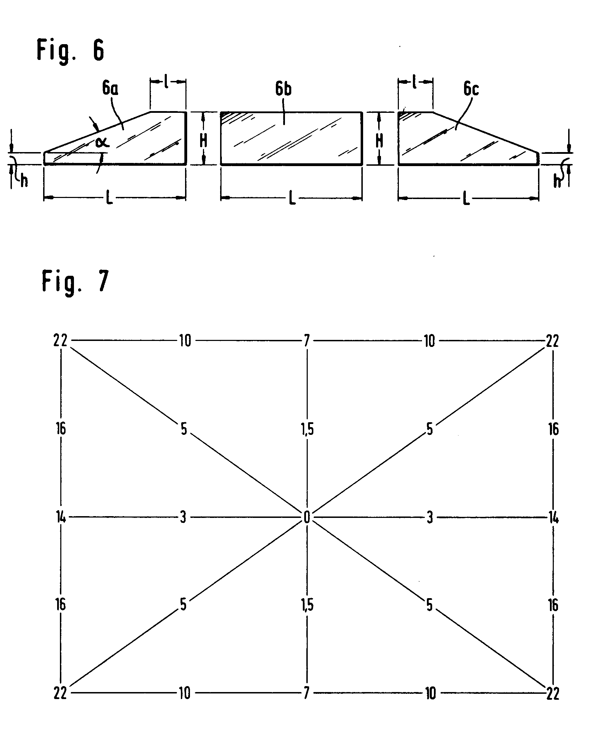

In Fig. 5 ist von der zweiten Ausführungsform die Strahlereinheit mit der Strahlungsquelle $7_1$ im Schnitt dargestellt, gestellt, bei der es sich um die linke Strahlungsquelle (s. Fig. 2) an einer der Längsseiten der Beleuchtungseinrichtung 4 handelt. Die Strahlungsquelle $7_1$ ist von zwei Wärmeschutzfiltern 6,6 und einem ersten Reflektorblech 6a umgeben, das den in Fig. 6 gezeigten Umriß aufweist. Das Reflektorblech 6a ist zwischen der Strahlungsquelle $7_1$ und dem Reflektorteil 3 angeordnet. Die Abschrägung der oberen Kante des ersten Reflektorblechs 6a ist von dem Reflektor 1 weggerichtet und weist auf die Vorlage 16 hin.

Fig. 6 zeigt die Umrisse des ersten, zweiten und dritten Reflektorblechs 6a, 6b, 6c, die den nebeneinander liegenden drei Strahlungsquellen $7_1$, $7_2$, $7_3$ entlang einer Längsseite der Beleuchtungseinrichtung 4 zugeordnet sind. Das erste und dritte Reflektorblech 6a, 6c weisen jeweils eine rechteckförmige Gestalt mit abgeschrägter oberer Kante auf, während das zweite Reflektorblech 6b, das der mittleren Strahlungsquelle $7_2$ zugeordnet ist, ein Rechteck ohne Abschrägung ist. Der Winkel $\alpha$, den die abgeschrägte obere Kante mit der Längsseite des ersten bzw. dritten Reflektorblechs 6a bzw. 6c einschließt, beträgt 18-20°. Das dritte, der rechten Strahlungsquelle $7_3$ zugeordnete Reflektorblech 6c ist mit seiner abgeschrägten oberen Kante auf den Reflektor 1 der Beleuchtungseinrichtung 4 hin gerichtet. Die Reflektorbleche 6a, 6b, 6c sind z.B. geprägt und zum Schutz gegen Oxidation oberflächenversiegelt. Geeignete Blechmaterialien sind Aluminiumbleche, plattiert mit Reinstaluminium.

Bei einer Abbildung einer Vorlage ergibt sich auf der Bildebene eine durch das Objektiv der Abbildungsoptik verursachte Helligkeitsabnahme zu den Bildrändern hin, die bei der Herstellung von Druckformen aus Druckplatten eine Verminderung der Druckqualität zu den Rändern hin bewirkt. Für den jeweilig betrachteten Bildpunkt in der Bildebene gilt für die Beleuchtungsstärke im allgemeinen das $\cos^4$-Gesetz, das besagt, daß die Beleuchtungsstärke $E(\omega)$ im Bildpunkt gegeben ist durch

$$E(\omega) = E \cdot \cos^4 \omega'$$

mit der Beleuchtungsstärke E im Schnittpunkt der optischen Achse der Abbildungsoptik mit der Bild-

ebene und dem Bildwinkel $\omega$ zwischen der optischen Achse und der Verbindungslinie von dem Objektiv zu dem Bildpunkt.

Mit anderen Worten bedeutet dies, daß die Beleuchtungsstärke in der Vorlagenebene für den jeweiligen Bildpunkt umso größer im Vergleich zu derjenigen im Schnittpunkt der optischen Achse mit der Vorlagenebene sein muß, je größer der Bildwinkel $\omega$ ist. Um eine gleichmäßige Beleuchtungsstärke auf der Bildebene zu erhalten, muß die Verteilung der Beleuchtungsstärke in den verschiedenen Punkten eines vorgegebenen Vorlagenformats in der Vorlagenebene beispielsweise der in Fig. 7 dargestellten Verteilung entsprechen. Die Zahlen bei den einzelnen Punkten geben an, um wieviel Prozente die Beleuchtungsstärke höher als im Mittelpunkt des Vorlagenformats ist. Mit dieser Verteilung der Beleuchtungsstärke in der Vorlagenebene wird in der Bildebene eine Verteilung der Beleuchtungsstärke erhalten, die Abweichungen von höchstens ± 5 % vom Sollwert ergibt.

Durch die Abmessungen der den Reflektorblechen zugrundeliegenden Rechtecke, die z.B. eine Länge L = 210 bis 230 mm und eine Höhe H von 50 bis 70 mm, insbesondere von L = 220 mm und H = 60 mm, aufweisen, einen Winkel $\alpha$ von 18° bis 20°, eine Parallelseite l von 65 bis 75 mm zur Länge L und eine Schmalseite h von 8 bis 15 mm, insbesondere von 10 mm, zur Höhe H im Fall des abgeschrägten ersten und dritten Reflektorblechs 6a, 6c, ist sichergestellt, daß die Beleuchtungsstärke im Zusammenwirken mit dem Reflektor 1 für den einzelnen Vorlagenpunkt weitgehend der Gleichung $E(\omega) = E \bullet 1/\cos^4 \omega$ entspricht, d.h. nach dem sogenannten $\cos^4$-Gesetz für den Bildpunkt die Helligkeitsabnahme kompensiert wird. Selbstverständlich kann bei der Abbildung auch ein Objektiv in der Abbildungsoptik zum Einsatz gelangen, das eine Helligkeitsabnahme gemäß dem $\cos^5$-Gesetz oder einer anderen Funktion bewirkt. Durch entsprechend angepaßte Abmessungen und Umrisse der Reflektorbleche kann dann auch dieser Helligkeitsabfall auf der Bildebene in der Weise kompensiert werden, daß auf die Vorlagenebene entsprechend differenzierte Beleuchtungsstärken gemäß dem $\cos^5$-Gesetz eingestrahlt werden.

Mit der Erfindung wird eine Beleuchtungseinrichtung geschaffen, bei der der von den Wärmeschutzfiltern abgedeckte Strahlungsbereich voll für die Ausleuchtung der Vorlage zur Verfügung steht. In der Praxis bedeutet dies, daß etwa ein Strahlungsbereich, der in einem Raumwinkel von etwa 230° bis 260° von den Strahlungsquellen abgestrahlt wird, auf die Vorlage auftrifft.

## Patentansprüche

1. Beleuchtungseinrichtung (4) für ein Projektionskopiergerät zum Ausleuchten und zur Projektion einer Vorlage (16) auf ein lichtempfindliches Aufzeichnungsmaterial, mit einer Vorlagenbühne für die Aufnahme der Vorlage, mit zumindest einer Strahlungsquelle (7), die von einem aus zwei Reflektorteilen (2,3) bestehenden Reflektor (1) teilweise umgeben ist, wobei die Reflektorteile an einer Trennstelle miteinander verbunden und voneinander lösbar sind und die einfallende Strahlung in Richtung der Vorlage reflektieren, dadurch gekennzeichnet, daß der Reflektor jeder Strahlungsquelle zusätzlich ein Reflektorblech (6a,6b,6c) zur Umlenkung der Strahlung in Richtung der Vorlage aufweist, daß jede Strahlungsquelle (7; $7_1$, $7_2$, $7_3$) von mindestens einem Wärmeschutzfilter (6) umgeben ist und daß jede Strahlungsquelle mit ihrem zugeordneten Wärmeschutzfilter und dem Reflektorblech Bestandteil einer Strahlereinheit (29) ist, die eine Halterung (10) für die Wärmeschutzfilter und eine weitere Halterung (9) für die Strahlungsquelle (7; $7_1$; $7_2$; $7_3$) aufweist, daß die Wärmeschutzfilter (6) den Infrarotanteil der Strahlung der Strahlungsquelle in Richtung Strahlungsquelle (7; $7_1$; $7_2$; $7_3$) reflektieren und die übrigen Strahlungsanteile durchlassen und gegenüber den Strahlungsquellen (7; $7_1$, $7_2$, $7_3$) und Reflektoren (1) so positioniert sind, daß jeder Strahl vor dem Auftreffen auf die Vorlage (16) eines der Wärmefilter (6) passiert, daß die Halterung (10) einen Ausschnitt (11) aufweist, durch den sich ein Block (32) erstreckt, der an der weiteren Halterung (9) lösbar befestigt ist und die Strahlungsquelle (7; $7_1$; $7_2$; $7_3$) trägt und daß jeder der beiden Reflektorteile (2, 3) an der Trennstelle (5) eines Reflektors (1) mit einem Vierkantprofil (27) ausgestattet ist, wobei die aneinander anliegenden Vierkantprofile (27, 27) durch einen Paßdorn (25) miteinander verbunden sind.

2. Beleuchtungseinrichtung nach Anspruch 1, dadurch gekennzeichnet, daß jeder Reflektor (1) aus planen Reflektorsegmenten (17,17,17,....) zusammengesetzt ist, die untereinander Winkel zwischen 14° bis 22° einschließen.

3. Beleuchtungseinrichtung nach Anspruch 1, dadurch gekennzeichnet, daß je drei Strahlungsquellen (7) an jeder Längsseite und je zwei Strahlungsquellen (7) an jeder Breitseite der Beleuchtungseinrichtung (4) symmetrisch zu der Mittellinie in Längs- bzw. Breitenrichtung angeordnet sind.

4. Beleuchtungseinrichtung nach Anspruch 2, dadurch gekennzeichnet, daß die Reflektorsegmente (17,17, ...) unterschiedlich lang sind.

5. Beleuchtungseinrichtung nach Anspruch 2, dadurch gekennzeichnet, daß die Zahl der Reflektorsegmente (17) der Reflektorteile (2; 3) jeweils vier beträgt.

6. Beleuchtungseinrichtung nach Anspruch 2, dadurch gekennzeichnet, daß die Längen der Reflektorsegmente (17,17,...) so bemessen sind, daß die von den Strahlungsquellen (7) ausgehenden Strahlen von jedem Reflektorsegment über die ganze Vorlagenlänge/breite reflektiert werden bzw. über einen bestimmten Teil der Vorlage zur Behebung eines Lichtloches.

7. Beleuchtungseinrichtung nach Anspruch 1, dadurch gekennzeichnet, daß die Reflektoren (1) der Längs- und Breitseiten an ihren Stoßstellen unter 45°-Gehrung bis auf einen Spalt von 2 - 3 mm zusammengefügt sind.

8. Beleuchtungseinrichtung nach Anspruch 1, dadurch gekennzeichnet, daß jede Strahlereinheit (29) mit einer Schiene, auf der die Halterungen (9,10) befestigt sind, in einen Schlitz (15) einer Führung (12) in Gestalt eines Vierkantprofils einsetzbar und entlang der Führung (12) verschieb- und positionierbar ist.

9. Beleuchtungseinrichtung nach Anspruch 8, dadurch gekennzeichnet, daß die Führung (12) in denjenigem Reflektorteil (2) des Reflektors (1) angeordnet ist, der weiter weg von einem Vorlagenhalter (20) für die Vorlage (16) als der andere Reflektorteil (3) liegt.

10. Beleuchtungseinrichtung nach Anspruch 8, dadurch gekennzeichnet, daß jedes der Wärmeschutzfilter (6) mit Hilfe einer Haltefeder (8), die an der Halterung (10) befestigt ist, lagefest in einem Randausschnitt der Halterung (10) gehalten ist.

11. Beleuchtungseinrichtung nach Anspruch 8, dadurch gekennzeichnet, daß der Schlitz (15) der Führung (12) eine Aufweitung aufweist, durch die ein Klötzchen (13) mit einer Breite größer als die Schlitzbreite einschiebbar ist, daß das Klötzchen (13) mit einer Schraube (14) im Eingriff steht, die den Schlitz (15) durchsetzt und mit der Unterseite ihres Schraubenkopfes auf der Schiene der Strahlereinheit (29) aufliegt, und daß das Klötzchen (13) beim Fixieren der Strahlereinheit (29) in der gewünschten Position längs der Führung (12) gegen die geschlitzte Seite der Führung anliegt.

12. Beleuchtungseinrichtung nach Anspruch 1, dadurch gekennzeichnet, daß jede Strahlungsquelle (7) an den beiden Breitseiten der Beleuchtungseinrichtung (4) von drei Wärmeschutzfiltern (6) und jede Strahlungsquelle ($7_1$;$7_2$;$7_3$) an den beiden Längsseiten der Beleuchtungseinrichtung (4) von je einem Reflektorblech (6a;6b;6c) und zwei Wärmeschutzfiltern (6) umgeben ist.

13. Beleuchtungseinrichtung nach Anspruch 12, dadurch gekennzeichnet, daß die Reflektorbleche (6a;6b;6c) der nebeneinanderliegenden Strahlungsquellen ($7_1$;$7_2$;$7_3$) unterschiedliche Zuschnitte aufweisen, die das Licht der einzelnen Strahlungsquelle ($7_1$;$7_2$;$7_3$) auf die Vorlagenebene unterschiedlich verteilen, so daß der bei gleichmäßig ausgeleuchteter Vorlagenebene durch das Objektiv verursachte Beleuchtungsstärkeabfall auf der Bildebene kompensiert ist.

14. Beleuchtungseinrichtung nach Anspruch 12, dadurch gekennzeichnet, daß das einzelne Reflektorblech (6a;6b; 6c) jeweils zwischen der Strahlungsquelle ($7_1$;$7_2$;$7_3$) und einem längeren von zwei Reflektorteilen (2,3) eines Reflektors (1) in der Strahlereinheit (29) angeordnet ist, daß das erste und dritte Reflektorblech (6a,6c) der linken und rechten Strahlungsquelle ($7_1$,$7_3$) an jeder der beiden Längsseiten der Beleuchtungseinrichtung (4) ein entlang der oberen Kante abgeschrägtes Rechteck ist und daß das zweite Reflektorblech (6b) der mittleren Strahlungsquelle ($7_2$) ein Rechteck ist.

15. Beleuchtungseinrichtung nach Anspruch 14, dadurch gekennzeichnet, daß das erste bzw. dritte Reflektorblech (6a;6c) mit seiner abgeschrägten oberen Kante von dem Reflektor (1) weg gerichtet bzw. auf den Reflektor (1) hin gerichtet ist.

16. Beleuchtungseinrichtung nach Anspruch 14, dadurch gekennzeichnet, daß die Abschrägung der oberen Kante des ersten und dritten Reflektorblechs (6a,6c) einen Winkel $\alpha$ = 18° - 20° mit der Längsseite des Reflektorblechs einschließt.

17. Beleuchtungseinrichtung nach Anspruch 14, dadurch gekennzeichnet, daß die Abmessungen und die Umrisse der Reflektorbleche (6a;6b;6c) so gewählt sind, daß die Beleuchtungsstärke in der Vorlagenebene für den jeweiligen Bildpunkt annähernd dem $\cos^4$-Gesetz entspricht.

**Claims**

1. Illumination system (4) for a projection copier for the illumination and projection of an original (16) onto a light-sensitive recording material, with an original platform to receive the original, with at least one radiating source (7), which is partially surrounded by a reflector (1) comprising two reflector parts (2, 3), the reflector parts being connected to each other and are separable from each other at a separating point and reflect the incident radiation in the direction of the original, wherein the reflector of each radiating source has an additional reflector plate (6a, 6b, 6c) to deflect the radiation in the direction of the original, wherein each radiating source (7; $7_1$; $7_2$; $7_3$) is surrounded by at least one heat-absorbing filter (6) and wherein each radiating source with its associated heat-absorbing filter and the reflector plate are component parts of a radiator unit (29) which has a bracket (10) for the heat-absorbing filters and a further bracket (9) for the radiating source (7; $7_1$; $7_2$; $7_3$), wherein the heat-absorbing filters (6) reflect the infrared component of the radiation of the radiating source in the direction of the radiating source (7; $7_1$; $7_2$; $7_3$) and admit the remaining radiation components and are positioned in relation to the radiating sources (7; $7_1$; $7_2$; $7_3$) and the reflectors (1) in such a way that each ray, prior to impinging upon the original (16), passes through one of the heat filters (6), wherein the bracket (10) has a cutout (11), through which a block (32) extends, which is detachably fastened on the further bracket (9) and supports the radiating source (7; $7_1$; $7_2$; $7_3$) and wherein each of the two reflector parts (2, 3) is equipped, at the separating point (5) of a reflector (1), with a square profile (27), the adjoining square profiles (27, 27) being connected to each other by a setting plug (25).

2. The illumination system as claimed in claim 1, wherein each reflector (1) is composed of plane reflector segments (17, 17, 17, ...), which enclose angles with one another between 14° and 22°.

3. The illumination system as claimed in claim 1, wherein three radiating sources (7) are arranged at each longitudinal side and two radiating sources (7) are arranged at each transverse side of the illumination system (4), symmetrical to the center line in longitudinal and transverse directions, respectively.

4. The illumination system as claimed in claim 2, wherein the reflector segments (17, 17, ...) have different lengths.

5. The illumination system as claimed in claim 2, wherein the number of reflector segments (17) of the reflector parts (2, 3) is four, in each case.

6. The illumination system as claimed in claim 2, wherein the lengths of the reflector segments (17, 17, ...) are dimensioned in such a way that the rays emitted by the radiating sources (7) are reflected by each reflector segment over the entire length/width of the original or over a certain part of the original for the elimination of a light hole.

7. The illumination system as claimed in claim 1, wherein the reflectors (1) of the longitudinal and transverse sides are brought together at their joints with a 45° miter but leaving a gap of 2-3 mm.

8. The illumination system as claimed in claim 1, wherein each radiator unit (29) is insertable by a rail, on which the brackets (9, 10) are fastened, into a slot (15) of a guide (12) in the form of a square profile, and is displaceable and positionable along the guide (12).

9. The illumination system as claimed in claim 8, wherein the guide (12) is arranged in that reflector part (2) of the reflector (1) which is further away from an original holder (20) for the original (16) than the other reflector part (3).

10. The illumination system as claimed in claim 8, wherein each of the heat-absorbing filters (6) is held securely in position in a border cutout of the bracket (10) with the aid of a retaining spring (8), which is fastened on the bracket (10).

11. The illuminating system as claimed in claim 8, wherein the slot (15) of the guide (12) has a widening, through which a small block (13), with a width greater than the slot width, can be pushed in, wherein the small block (13) is in engagement with a screw (14), which passes through the slot (15) and rests by the underside of its screwhead on the rail of the radiator unit (29), and wherein the small block (13) rests against the slotted side of the guide during fixing of the radiator unit (29) in the desired position along the guide (12).

12. The illumination system as claimed in claim 1, wherein each radiating source (7) at the two transverse sides of the illumination system (4) is surrounded by three heat-absorbing filters (6) and each radiating source ($7_1$; $7_2$; $7_3$) at the two longitudinal sides of the illumination system (4) is surrounded by one reflector plate (6a; 6b; 6c) each and two heat-absorbing filters (6).

13. The illumination system as claimed in claim 12, wherein the reflector plates (6a; 6b; 6c) of the radiating sources ($7_1$; $7_2$; $7_3$) laying alongside one another have different configurations, which distribute the light of the individual radiating source ($7_1$; $7_2$; $7_3$) differently onto the plane of the original, so that the decrease in intensity of illumination with evenly illuminated plane of the original, caused by the lens, is compensated at the image plane.

14. The illumination system as claimed in claim 12, wherein the individual reflector plate (6a, 6b; 6c) is in each case arranged between the radiating source (($7_1$; $7_2$; $7_3$) and the longer of two reflector parts (2, 3) of a reflector (1) in the radiator unit (29), wherein the first and third reflector plates (6a, 6c) of the lefthand and right-hand radiating sources ($7_1$, $7_3$) at each of the two longitudinal sides of the illumination system (4) are rectangles beveled along the upper edges, and wherein the second reflector plate (6b) of the middle radiating source ($7_2$) is a rectangle.

15. The illumination system as claimed in claim 14, wherein the first and third reflector plates (6a; 6c) are directed with their beveled upper edges away from the reflector (1) or, respectively, directed toward the reflector (1).

16. The illumination system as claimed in claim 14, wherein the bevel of the upper edges of the first and third reflector plates (6a, 6b) encloses an angle $\alpha = 18^\circ$-$20^\circ$ with the longitudinal side of the reflector plate.

17. The illumination system as claimed in claim 14, wherein the dimensions and the outlines of the reflector plates (6a; 6b; 6c) are chosen such that the intensity of illumination in the plane of the original corresponds approximately to the $\cos^4$ law for the respective image point.

**Revendications**

1. Dispositif d'éclairement (4) pour un appareil de copiage par projection, pour l'éclairement et la projection d'un original (16) sur un support d'enregistrement photosensible, comportant une platine de support de l'original destiné à recevoir l'original, au moins une source de rayonnement (7), qui est entourée partiellement par un réflecteur (1) constitué de deux éléments (2,3), les éléments du réflecteur étant raccordés entre eux au niveau d'une zone de séparation et pouvant être séparés l'un de l'autre et réfléchissant le rayonnement incident en direction de l'original, caractérisé en ce que le réflecteur de chaque source de rayonnement possède en outre une plaque réfléchissante (6a,6b,6c) servant à envoyer le rayonnement en direction de l'original, que chaque source de rayonnement (7;$7_1$,$7_2$,$7_3$) est entourée par au moins un filtre de protection thermique (6) et que chaque source de rayonnement y compris le filtre de protection thermique, qui lui est associé, et la plaque réfléchissante, fait partie d'une unité d'émission de rayonnement (29), qui possède un support (10) pour les filtres de protection thermique et un autre support (9) pour la source de rayonnement (7;$7_1$;$7_2$;$7_3$), que les filtres de protection thermique (6) réfléchissent la composante infrarouge du rayonnement de la source de rayonnement en direction de la source de rayonnement (7;$7_1$;$7_2$;$7_3$) et transmettent les autres composantes du rayonnement et sont disposés par rapport aux sources de rayonnement (7;$7_1$;$7_2$;$7_3$) et aux réflecteurs (1) de telle sorte qu'avant d'atteindre l'original (16), chaque rayon traverse l'un des filtres de protection thermique (6), que le support (10) possède une découpe (11) dans laquelle s'étend un bloc (32), qui est fixé de façon amovible à l'autre support (9) et porte la source de rayonnement (7;$7_1$;$7_2$;$7_3$) et que chacun des deux éléments (2,3) du réflecteur possède un profil carré (27) au niveau de la zone de séparation (5) d'un réflecteur (1), les profils carrés (27,27), qui s'appliquent l'un contre l'autre, étant reliés entre eux par l'intermédiaire d'un boulon d'ajustage (25).

2. Dispositif d'éclairement selon la revendication 1, caractérisé en ce que chaque réflecteur (1) est constitué par des segments plats de réflecteur (17,17,17,...) qui font entre eux un angle compris entre $14^\circ$ et $22^\circ$.

3. Dispositif d'éclairement selon la revendication 1, caractérisé en ce que respectivement trois sources de rayonnement (7) sont disposées sur chaque grand côté et respectivement deux sources de rayonnement (7) sont disposées sur chaque petit côté du dispositif d'éclairement (4), symétriquement par rapport à l'axe médian dans la direction longitudinale et dans la direction latérale.

4. Dispositif d'éclairement selon la revendication 2, caractérisé en ce que les segments de réflecteur (17,17,...) ont des longueurs différentes.

5. Dispositif d'éclairement selon la revendication 2, caractérisé en ce que le nombre des segments de réflecteur (17) des éléments de réflecteurs (2;3) est égal respectivement à quatre.

6. Dispositif d'éclairement selon la revendication 2, caractérisé en ce que les longueurs des segments de réflecteur (17,17,...) sont dimensionnées de telle sorte que les rayons émis par les sources de rayonnement (7) sont réfléchis par chaque segment de réflecteur sur toute la longueur/largeur de l'original ou sur une partie déterminée de l'original de mannière à éviter une zone de manque de lumière.

7. Dispositif d'éclairement selon la revendication 1, caractérisé en ce que les réflecteurs (1) des grands côtés et des petits côtés sont réunis à onglet à 45° au niveau de leurs points d'aboutement, tout en laissant subsister une fente de 2-3 mm.

8. Dispositif d'éclairement selon la revendication 1, caractérisé en ce que chaque unité d'émission de rayonnement (29) peut être insérée, par un rail sur lequel sont fixés les supports (9,10), dans une fente (15) d'un guide (12) sous la forme d'un profil carré et peut être déplacée et positionnée le long du guide (12).

9. Dispositif d'éclairement selon la revendication 8, caractérisé en ce que le guide (12) est disposé dans l'élément (2) du réflecteur, qui est plus écarté d'un porte-original (20) pour supporter l'original (16), que l'autre élément (3) du réflecteur.

10. Dispositif d'éclairement selon la revendication 8, caractérisé en ce que chacun des filtres de protection thermique (6) est maintenu en position fixe dans une découpe marginale du support (10), à l'aide d'un ressort de fixation (8), qui est fixé au support (10).

11. Dispositif d'éclairement selon la revendication 8, caractérisé en ce que la fente (15) du guide (12) possède une partie élargie, dans laquelle on peut insérer une petite cale (13) possédant une largeur supérieure à la largeur de la fente, que la petite cale (13) engrène avec une vis (14) qui traverse la fente (15) et s'applique, par la face inférieure de sa tête, sur le rail de l'unité d'émission de rayonnement (29) et que, lors de la fixation de l'unité d'émission de rayonnement (29) dans la position désiree le long du guide (12), la petite cale (13) s'applique contre le côté fendu du guide.

12. Dispositif d'éclairement selon la revendication 1, caractérisé en ce que chaque source de rayonnement (7) au niveau des deux petits côtés du dispositif d'éclairement (4), est entourée par trois filtres de protection thermique (6) et que chaque source de rayonnement $(7_1;7_2;7_3)$ sur les deux grands côtés du dispositif d'éclairement (4), est entourée par une plaque réfléchissante respective (6a;6b;6c) et par deux filtres de protection thermique (6).

13. Dispositif d'éclairement selon la revendication 12, caractérisé en ce que les plaques réfléchissantes (6a;6b;6c) des sources de rayonnement $(7_1;7_2;7_3)$ disposées côte-à-côte possèdent des contours différents, qui répartissent différemment la lumière de différentes sources de rayonnement $(7_1;7_2;7_3)$ dans le plan de l'original, de sorte que la diminution de l'intensité d'éclairement, provoquée par l'objectif dans le cas où le plan de l'original est éclairé de façon uniforme, est compensée dans le plan image.

14. Dispositif d'éclairement selon la revendication 12, caractérisé en ce que la plaque réfléchissante individuelle (6a;6b;6c) est disposée respectivement entre la source de rayonnement $(7_1;7_2;7_3)$ et un élément plus long faisant partie de deux éléments réfléchissants (2,3) d'un réflecteur (1) dans l'unité d'émission de rayonnement (29), que les premières et les troisièmes plaques réfléchissantes (6a,6c) des sources de rayonnement de gauche et de droite $(7_1,7_3)$ sur chacun des deux grands côtés du dispositif d'éclairement (4) sont un rectangle biseauté le long de son bord supérieur, et que la seconde plaque réfléchissante (6b) de la source centrale de rayonnement $(7_2)$ est un rectangle.

15. Dispositif d'éclairement selon la revendication 14, caractérisé en ce que le bord supérieur biseauté de la première ou de la troisième plaque réfléchissante (6a;6c) s'écarte du réflecteur (1) ou est dirigé vers le réflecteur (1).

16. Dispositif d'éclairement selon la revendication 14, caractérisé en ce que le biseau du bord supérieur des première et troisième plaques réfléchissantes (6a,6c) fait un angle $\alpha$ = 18° - 20° avec le grand côte de la plaque réfléchissante.

**17.** Dispositif d'éclairement selon la revendication 14, caractérisé en ce que les dimensions et les contours des plaques réfléchissantes (6a;6b;6c) sont choisis de manière que l'intensité d'éclairement dans le plan de l'original pour le point d'image respectif corresponde approximativement à la loi en $\cos^4$.

Fig. 1

EP 0 216 330 B1

Fig. 2

Fig. 4

Fig. 3

Fig. 5

## Fig. 6

## Fig. 7